(19) **Europäisches Patentamt / European Patent Office / Office européen des brevets**

(11) **EP 2 484 644 B1**

(12) **EUROPEAN PATENT SPECIFICATION**

(45) Date of publication and mention
of the grant of the patent:
**23.10.2013  Bulletin 2013/43**

(51) Int Cl.:
**C03B 37/018** (2006.01)   **C03B 37/012** (2006.01)

(21) Application number: **12153445.7**

(22) Date of filing: **01.02.2012**

(54) **Method for producing a glass optical fiber preform**

Verfahren zur Herstellung einer Vorform aus Glas für optische Fasern

Procédé de production d'une préforme en verre pour des fibres optiques

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.02.2011  JP 2011021995**

(43) Date of publication of application:
**08.08.2012  Bulletin 2012/32**

(73) Proprietor: **Sumitomo Electric Industries, Ltd.
Osaka-shi, Osaka 541-0041 (JP)**

(72) Inventors:
• **Tamura, Yoshiaki
Kanagawa (JP)**
• **Hirano, Masaaki
Kanagawa (JP)**
• **Haruna, Tetsuya
Kanagawa (JP)**

(74) Representative: **HOFFMANN EITLE
Patent- und Rechtsanwälte
Arabellastrasse 4
81925 München (DE)**

(56) References cited:
**WO-A1-2007/149344      WO-A2-2005/021455
US-A1- 2005 144 986      US-A1- 2008 050 086**

## Description

BACKGROUND OF THE INVENTION

Field of the Invention

The present invention relates to a method for producing an optical fiber preform.

Description of the Related Art

Japanese Unexamined Patent Application Publication (Translation of PCT Application) Nos. 2007-504080 and 2009-541796 and U.S. Patent Application Publication No. 2005/0144986 describe optical fibers composed of silica-based glass, each of the optical fibers including an alkali metal-doped core region. The doping of a core part of an optical fiber preform with the alkali metal in a concentration of several hundreds to several millions of atomic parts per million reduces the viscosity of the core part during the drawing of the optical fiber preform. This allows the relaxation of the network structure of the silica glass to proceed, thereby reducing the Rayleigh scattering loss of an optical fiber produced by drawing the preform.

As a method for doping a silica glass with an alkali metal, a diffusion method is known. In the diffusion method, a glass pipe composed of the silica-based glass is heated to 1500°C to 2000°C with an external heat source or a plasma is generated in the glass pipe while the vapor of an alkali metal or alkali metal salt (e.g., KBr or KI), which serves as a raw material, is fed into the glass pipe together with oxygen. Thereby, the inner surface of the glass pipe is doped with the alkali metal element by diffusion.

After the glass pipe is doped with the alkali metal element, the diameter of the resulting glass pipe is reduced. After the reduction in diameter, the inner surface of the glass pipe is etched to remove transition metals, such as Ni and Fe, which are contaminants incorporated during the doping of the glass pipe with the alkali metal element. After the etching, the glass pipe is collapsed to form an alkali metal-doped core rod. A cladding part is formed on the outside of the alkali metal-doped core rod to produce an optical fiber preform. The optical fiber preform is drawn to produce an optical fiber.

For an alkali metal-containing silica glass, the glass transition temperature is as low as 1000°C to 1400°C, and the rate of crystallization is high. Thus, in the production of an optical fiber preform, in the steps of heating and cooling an alkali metal doped-glass, the glass is likely to crystallize, disadvantageously reducing the yield of a satisfactory optical fiber preform. In the case where a high-purity silica glass article is formed by a vapor-phase method, in a step of drying a silica glass soot article with chlorine gas, the silica glass article is contaminated with chlorine. The reaction of chlorine and an alkali metal in the silica glass forms an alkali chloride.

The alkali chloride is not included in the network of the silica glass. Thus, the alkali chloride causes voids or serves as crystallization nuclei in the production process of an optical fiber preform.

The presence of voids and crystallization nuclei in an optical fiber preform (in particular, a core part) causes an increase in the attenuation of an optical fiber produced by drawing the optical fiber preform. In particular, in a collapse step of collapsing a silica glass tube to form a core rod, the silica glass tube is heated with a high concentration of an alkali oxide exposed at the inner surface of the silica glass tube, so that voids and crystals are likely to be formed. An optical fiber produced by drawing such an optical fiber preform including a core part having voids and crystals has high attenuation.

SUMMARY OF THE INVENTION

Accordingly, it is an object of the present invention to provide a method for producing an optical fiber preform suitably used for the production of an optical fiber having low attenuation.

According to an aspect of the present invention, a method for producing an optical fiber preform that includes a core part and a cladding part, the optical fiber preform being composed of a silica-based glass, includes a collapse step of collapsing a silica-based glass tube by heating with a heat source continuously traversed in the longitudinal direction of the glass tube to form a first glass rod to be formed into a core part or part of a core part of an optical fiber, the glass tube having an inner surface doped with an alkali metal element, in which the glass tube has a maximum alkali metal concentration of 500 to 20,000 atomic ppm, a maximum chlorine concentration of 0 to 1000 atomic ppm, and a maximum fluorine concentration of 0 to 10,000 atomic ppm, and in which in the collapse step, the maximum temperature of the outer surface of the glass tube is in the range of 2000°C to 2250°C, and the traverse speed of the heat source is in the range of 30 mm/min to 100 mm/min.

In the method for producing an optical fiber preform according to the aspect of the present invention, in the collapse step, a pressure inside the glass tube is preferably at least 90 kPa lower than a pressure outside the glass tube. Preferably, the method for producing an optical fiber preform according to the aspect of the present invention further includes a first perimeter grinding step of grinding the perimeter of the first glass rod formed in the collapse step to allow the first glass rod to have a substantially perfect circular cross section. In the method for producing an optical fiber preform according to the aspect of the present invention, the maximum value of the relative refractive index difference of the first glass rod is preferably in the range of -0.1% to +0.1%, and the method may further include a cladding part formation step of forming an optical cladding part or part of an optical cladding part around the perimeter of the first glass rod, in which the minimum value of the relative refractive index difference of the optical cladding part is preferably in the range of -0.2% to -0.5%. In this specification, the term "relative refractive index difference" indicates a value with respect to the refractive index of pure silica glass, unless otherwise specified, i.e.,

$$\frac{\Delta_{object} - \Delta_{pure\ silica}}{\Delta_{pure\ silica}}.$$

Preferably, the method for producing an optical fiber preform according to the aspect of the present invention further includes a core part diameter extension step of arranging a silica glass having a chlorine concentration of 1000 atomic ppm to 15, 000 atomic ppm around the perimeter of the first glass rod formed in the collapse step to form a second glass rod to be formed into a core part or part of a core part of an optical fiber. In this case, preferably, the method further includes a second perimeter grinding step of grinding the perimeter of the second glass rod formed in the core part diameter extension step to allow the second glass rod to have a substantially perfect circular cross section. In the method for producing an optical fiber preform according to the aspect of the present invention, the maximum value of the relative refractive index difference of the second glass rod is preferably in the range of- 0.1% to +0.1%, and the method may further include a cladding part formation step of forming an optical cladding part or part of an optical cladding part around the perimeter of the second glass rod, in which the minimum value of the relative refractive index difference of the optical cladding part is preferably in the range of- 0.2% to- 0.5%.

According to the present invention, it is possible to produce an optical fiber preform suitably used for the production of an optical fiber having low attenuation.

BRIEF DESCRIPTION OF THE DRAWINGS

Figure 1 illustrates a flowchart of a method for producing an optical fiber preform according to an embodiment of the present invention.

Figures 2A to 2D are conceptual drawings illustrating alkali metal addition step S1 in the flowchart in Fig. 1.

Figure 3 is a graph illustrating the presence or absence of the occurrence of crystallization as a function of the maximum temperature in a heated portion in a collapse step and the potassium concentration.

Figure 4 is a graph illustrating the presence or absence of the occurrence of crystallization as a function of the traverse speed and the potassium concentration in the collapse step.

DESCRIPTION OF THE PREFERRED EMBODIMENTS

Embodiments of the present invention will be described below with reference to the attached drawings. The embodiments are provided solely for purposes of illustration and are not intended to be limitative. In the drawings, the same elements are designated using the same reference numerals, and descriptions are not redundantly repeated. The ratios of dimensions in the drawings are not always accurate.

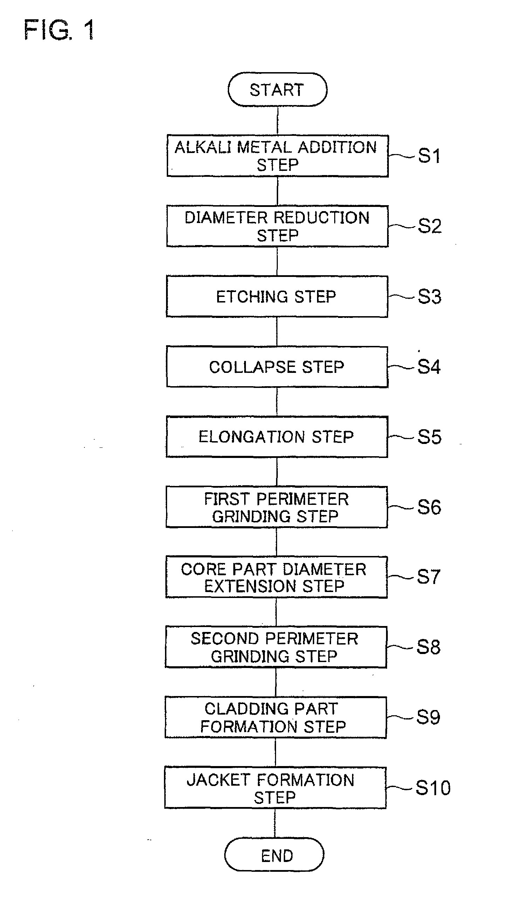

Figure 1 illustrates a flowchart of a method for producing an optical fiber preform according to an embodiment of the present invention. The method for producing an optical fiber preform according to this embodiment includes alkali metal addition step S1, diameter reduction step S2, etching step S3, collapse step S4, elongation step S5, first perimeter grinding step S6, core part diameter extension step S7, second perimeter grinding step S8, cladding part formation step S9, and jacket formation step S10. These steps are sequentially performed to produce an optical fiber preform including a core part and a cladding part and being composed of a silica-based glass.

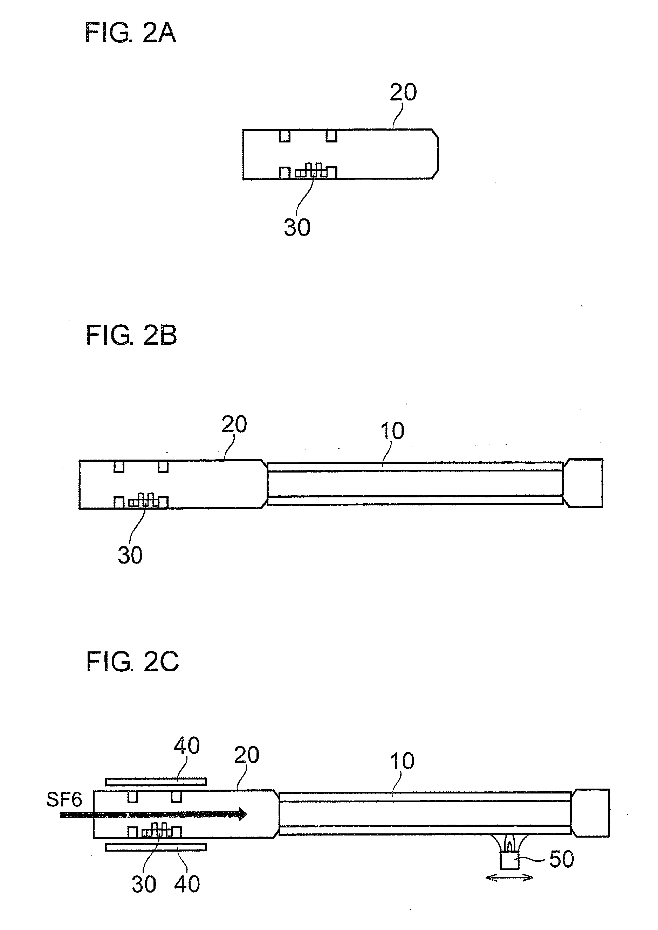

Figures 2A to 2D illustrate alkali metal addition step S1 in the flowchart in Fig. 1. In alkali metal addition step S1, the inner surface of a glass tube 10 composed of a silica-based glass (hereinafter, referred to as a "silica glass tube 10") is doped with an alkali metal. As the alkali metal added, potassium is preferably used. Sodium, rubidium, and cesium may also be used. The silica glass tube 10 has a maximum chlorine concentration of 0 to 1000 atomic ppm and a maximum fluorine concentration of 0 to 10,000 atomic ppm. The concentrations of contaminants other than chlorine and fluorine, for example, transition metals and OH groups, are sufficiently low and are preferably, for example, 10 mol ppb or less. For example, the concentration of chlorine is 200 atomic ppm. The maximum concentration of fluorine is 4000 atomic ppm. The outside diameter is 25 mm. The inside diameter is 10 mm.

As illustrated in Fig. 2A, a supporting pipe 20 to be connected to an end of the silica glass tube 10 has a source-material supply portion with a reduced inside diameter. A KBr source 30 is placed in the source-material supply portion. As illustrated in Fig. 2B, the silica glass tube 10 is connected to the supporting pipe 20. The resulting article is mounted on a lathe.

Dry $N_2$ gas fed from a gas supply unit (not illustrated) is allowed to flow from the supporting pipe 20 to the silica glass tube 10 to dry the KBr source 30 placed in the source-material supply portion while the source-material supply portion of the supporting pipe 20 is heated to 600°C for 30 minutes with an electric furnace 40. Then, as illustrated in Fig. 2C, $SF_6$ gas is allowed to flow from the supporting pipe 20 to the silica glass tube 10 to etch a predetermined thickness of the inner surface of the silica glass tube 10, thereby removing impurities attached to the inner surface of the silica glass tube 10.

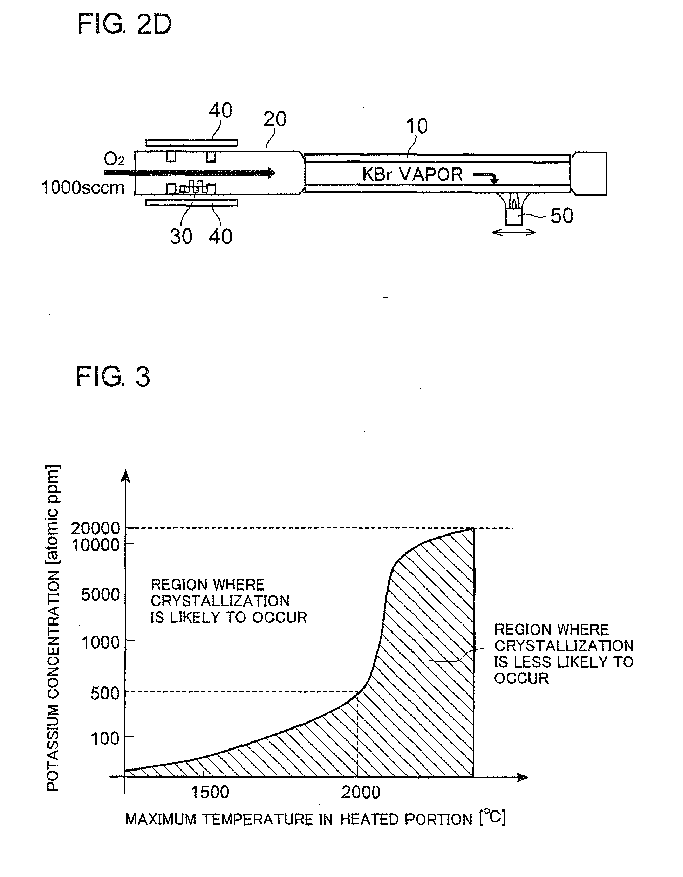

As illustrated in Fig. 2D, $O_2$ gas fed from a gas supply unit (not illustrated) is allowed to flow from the supporting pipe 20 to the silica glass tube 10 while the source-material supply portion of the supporting pipe 20 is heated to 780°C with the electric furnace 40, so that KBr vapor generated from the KBr source 30 placed in the source-material supply portion is allowed to flow into the silica glass tube 10 together with the $O_2$ gas. The silica glass tube 10 is heated from the outside thereof with a heat source, such as an oxyhydrogen burner 50, in such a manner that the maximum outer surface temperature is in the range of 2000°C to 2250°C. Consequently, the silica glass tube 10 is doped with potassium flowing therethrough by diffusion. After the alkali metal addition step S1, the silica glass tube 10 has a maximum potassium concentration of 500 to 20,000 atomic ppm.

In diameter reduction step S2, after the supply of KBr vapor by heating the source-material supply portion, heating is continued with the oxyhydrogen burner 50 to reduce the diameter of the glass tube until the inside diameter of the glass tube reaches about 3 mm.

In etching step S3, the glass tube is heated to the maximum temperature of 1900°C to 2250°C with the oxyhydrogen burner continuously traversed at a speed of 50 mm/min to 100 mm/min while $SF_6$ and $O_2$ are allowed to flow into the glass tube having a reduced inside diameter at a flow rate of 100 sccm (100 cc/min in terms of standard conditions) and 100 sccm, respectively. Preferably, $SF_6$ is used as an etching gas. Other examples of the etching gas that may be used include $CF_4$, $NF_3$, and $C_2F_6$. Thereby, the inner surface of the glass tube is etched by a thickness of about 400 to about 800 $\mu$m to remove a layer containing impurities, such as transition metals and OH groups, incorporated during the step of diffusing potassium, the layer having a high impurity concentration (e.g., 10 mol ppb or more).

In etching step S3, the inner surface of the glass tube is preferably etched by 5% to 25% of the thickness of a region where the potassium element is diffused. Transition metals (e.g., Fe, Ni, and Co) contained in the source material or the carrier gas are diffused into the glass simultaneously with the diffusion of potassium. The etching within the range described above reduces the attenuation due to the impurities to 0.001 dB/km or less at a wavelength of 1.55 $\mu$m, with potassium remaining.

In etching step S3, the pressure inside the glass tube is preferably set to a pressure 0.1 to 1 kPa higher than the pressure outside the glass tube. In this case, the glass tube can be etched at a high temperature without being collapsed.

In collapse step S4, the surface of the glass tube is heated to 2000°C to 2250°C with a heat source, such as a flame from an oxyhydrogen burner, continuously traversed in the longitudinal direction of the glass tube at a traverse speed of 30 mm/min to 100 mm/min while a pressure inside the glass tube is set to a pressure at least 90 kPa lower than a pressure outside the glass tube, thereby collapsing the glass tube to form a transparent glass rod (first glass rod) composed of a silica-based glass. In collapse step S4, a large difference in pressure between the inside and outside of the glass tube makes it possible to efficiently increase the speed of the traverse, which is preferred.

The collapse step is performed under the conditions, thus inhibiting the occurrence af the crystallization during the collapse step. A maximum alkali metal concentration of 500 atomic ppm or more results in a reduction in the viscosity of the core, thereby reducing the scattering loss. A maximum alkali metal concentration of 20,000 atomic ppm or more results in a high crystallization rate, thus causing difficulty in inhibiting the occurrence of the crystallization during the collapse step.

A high chlorine concentration in the glass rod leads to the formation of KCl in the silica glass. KCl serves as a nucleus to cause the crystallization of the silica glass to proceed. Thus, the maximum chlorine concentration is preferably 1000 atomic ppm or less. A high fluorine concentration leads to the scattering loss due to fluorine and leads to a reduction in the refractive index of the core, failing to form a waveguide structure. Thus, the maximum fluorine concentration is preferably in the range of 0 to 10.000 atomic ppm.

With respect to the heat source, an oxyhydrogen burner may be used. Dry heat sources, such as electric furnaces and thermal plasmas, are preferably used. The heating temperature is preferably 2000°C or higher to inhibit the formation of crystals. However, it is difficult to increase the glass temperature to 2250°C or higher. The traverse speed of the heat source is preferably 30 mm/min or more, which is sufficiently high to the extent that the crystallization does not occur. Furthermore, the traverse speed is preferably 100 mm/min or less in order to collapse the glass tube without forming voids.

In elongation step S5, the glass rod formed in the collapse step S4 is elongated while the glass rod is heated with a heat source, such as an oxyhydrogen burner, in such a manner that the outside diameter is 11 mm. In first perimeter grinding step S6. the perimeter of the glass rod is ground in such a manner that the outside diameter is 6 mm. This removes a silica glass layer where OH groups are diffused by heating with the oxyhydrogen burner. This also allows the glass rod to have a substantially perfect circular cross section. The term "substantially perfect circular cross section" indicates that the cross section has a non-circularity of 0.4% or less (the non-circularity indicating a value obtained by dividing a difference in length between the major axis and the minor axis by the length of the major axis when the perimeter of the glass rod is approximated as an ellipse).

It is known that in the case where a glass tube is collapsed at a large different in pressure between the inside and outside of the glass tube, the resulting glass rod has an elliptic cross section. In this case, a region doped with an alkali metal also has an elliptic cross section. After the outside of the glass rod is ground in such a manner that the glass rod has a substantially perfect circular cross section, when an optical fiber preform including the glass rod serving as a core part or serving partially as a core part is produced and drawn by a known method, the polarization mode dispersion of the resulting optical fiber is not degraded. The reason for this is as follows: An alkali metal has a high diffusion coefficient ($1 \times 10^{-6}$ cm$^2$/s) at 1500°C. Thus, the alkali metal is diffused in a portion by heating during the drawing, the portion having a volume several to several tens of times that of the region doped with the alkali metal. Consequently, the alkali metal is distributed in a region having a diameter several times the mode field diameter of the optical fiber. Note that before the first perimeter grinding step, the step of elongating the silica glass rod may not be provided.

In core part diameter extension step S7, a silica glass having a chlorine concentration of 1000 atomic ppm to 15,000 atomic ppm is arranged around the glass rod whose perimeter has been ground in first perimeter grinding step S6, thereby forming a glass rod having an extended portion (second glass rod). The silica glass will be formed into a core part or part of a core part of an optical fiber.

In core part diameter extension step S7, the increase in the diameter of the core part provides a large-sized optical fiber preform, thus reducing the production cost of the optical fiber preform and the optical fiber. A central portion derived from the glass rod formed in the collapse step before the diameter extension has a small diameter in a fiber state, so that the proportion of light propagating the central portion is low. This reduces the influence of transition metals and OH groups, which can be incorporated together with the addition of an alkali oxide, on attenuation, thereby reducing the attenuation. The ratio of the perimeter of the glass rod after the diameter extension to the perimeter of the glass rod before the diameter extension is preferably in the range of 2 to 10.

In second perimeter grinding step S8, the perimeter of the glass rod having the extended portion formed in core part diameter extension step S7 is ground in such a manner that the glass rod has a substantially perfect circular cross section. Note that core part diameter extension step S7 and second perimeter grinding step S8 may not be performed.

In cladding part formation step S9, an optical cladding part is formed around the perimeter of the resulting glass rod. The maximum refractive index of the glass rod is higher than the minimum refractive index of the optical cladding part. In particular, preferably, the glass rod to be formed into a core or part of a core of an optical fiber contains the alkali metal, chlorine, and fluorine, the concentration of other contaminants being 10 ppb or less. In this case, the maximum value of the relative refractive index difference of the glass rod is preferably in the range of -0.1% to +0.1%. The optical cladding part is preferably composed of a fluorine-doped silica glass. In the case where the fluorine concentration is as high as 45,000 atomic ppm or more and where the relative refractive index difference is -0.5% or less, the attenuation is increased. Thus, the minimum value of the relative refractive index difference of the optical cladding part is preferably in the range of -0.2% to -0.5%.

The formation of the optical cladding part provides an optical fiber preform through which a low loss optical fiber can be made. The relative refractive index difference between the maximum value in the core part and the minimum value in the optical cladding is preferably in the range of 0.2% to 0.6%. A silica glass to be formed into a physical cladding part may be arranged outside the optical cladding part.

In jacket formation step S 10, a jacket part to be formed into a physical cladding part is formed by a known method, for example, the VAD method, the OVD method, or the rod-in-tube method, thereby providing an optical fiber preform. Drawing the optical fiber preform produces an optical fiber.

The optical fiber produced as described above has low attenuation. That is, it is possible to produce an optical fiber preform by the method for producing an optical fiber preform according to an embodiment of the present invention, the optical fiber preform being suitable for the production of an optical fiber having low attenuation.

In a drawing step, the alkali metal is diffused into the optical cladding part, thus reducing the viscosities of the core part and the optical cladding part compared with the jacket part. As a result, compressive strain remains in the core part and the optical cladding part of the resulting optical fiber. If tensile strain remains in the core part of an optical fiber, density fluctuations in the $SiO_2$ network structure of the glass are increased, thus disadvantageously increasing the attenuation. In the optical fiber according to the present invention, the compressive strain remains in the core part, eliminating an increase in attenuation. It is thus possible to provide the optical fiber having low attenuation.

The fictive temperature of the core part of the optical fiber may be set to 1500°C or lower. The fictive temperature is determined by Raman spectroscopy and indicates a temperature of a supercooled state which has the same structure as the glass. A lower fictive temperature results in the relaxation of the density fluctuations of the glass, thereby reducing the Rayleigh scattering loss. It is thus possible to provide the optical fiber having low attenuation.

Furthermore, the attenuation of the optical fiber may be set to 0.175 dB/km or less at a wavelength of 1550 nm. The optical fiber having low attenuation is suitable for long distance transmission. The attenuation is preferably 0.170 dB/km or less and more preferably 0.165 dB/km or less at a wavelength of 1550 nm.

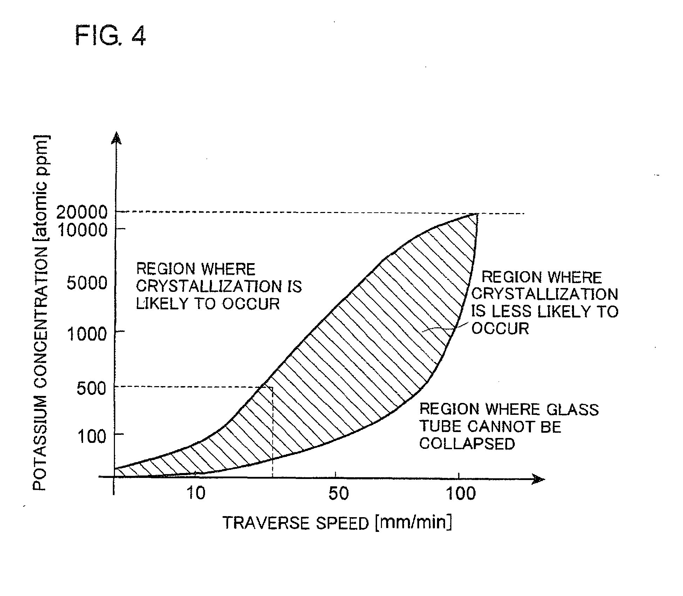

Figure 3 is a graph illustrating the presence or absence of the occurrence of crystallization as a function of the potassium concentration and the maximum temperature in a heated portion when a collapse step is performed at a traverse speed of 30 mm/min. Figure 4 is a graph illustrating the presence or absence of the occurrence of crystallization as a function of the potassium concentration and the traverse speed when the collapse step is performed at 2250°C. These graphs demonstrate that in the collapse step, in the case where the maximum temperature of the outer surface of the glass tube is in the range of 2000°C to 2250°C and where the traverse speed of the heat source is in the range of 30 mm/min to 100 mm/min, the occurrence of the crystallization is inhibited.

As a comparative example, in the collapse step, a flame, having a temperature of 1900°C, from an oxyhydrogen burner was traversed at a traverse speed of 5 mm/min under a reduced pressure of 1 kPa. In this case, the inner surface of the glass tube was whitened. X-ray diffraction measurement of the white matter revealed that the glass was crystallized. In a crystallized core, many cracks are formed in the crystallized portions, and gas components trapped therein remain in the form of voids. Thus, the resulting glass rod cannot be formed into a fiber.

**Claims**

1. A method for producing an optical fiber preform that includes a core part and a cladding part, the optical fiber preform being composed of a silica-based glass, the method comprising:

   a collapse step of collapsing a silica-based glass tube by heating with a heat source continuously traversed in the longitudinal direction of the glass tube to form a first glass rod to be formed into a core part or part of a core part of an optical fiber, the glass tube having an inner surface doped with an alkali metal element, wherein the glass tube has a maximum alkali metal concentration of 500 to 20,000 atomic ppm, a maximum chlorine concentration of 0 to 1000 atomic ppm, and a maximum fluorine concentration of 0 to 10,000 atomic ppm, **characterized in that**, in the collapse step, the maximum temperature of the outer surface of the glass tube is in the range of 2000°C to 2250°C, and the traverse speed of the heat source is in the range of 30 mm/min to 100 mm/min.

2. The method according to Claim 1, wherein in the collapse step, a pressure inside the glass tube is at least 90 kPa lower than a pressure outside the glass tube.

3. The method according to Claim 1, further comprising:

   a first perimeter grinding step of grinding the perimeter of the first glass rod formed in the collapse step to allow the first glass rod to have a substantially perfect circular cross section.

4. The method according to any one of Claims 1 to 3, wherein the maximum value of the relative refractive index difference of the first glass rod is in the range of -0.1% to +0.1%, and the method further comprises:

   a cladding part formation step of forming an optical cladding part or part of an optical cladding part around the perimeter of the first glass rod, wherein the minimum value of the relative refractive index difference of the optical cladding part is in the range of -0.2% to -0.5%.

5. The method according to any one of Claims 1 to 3, further comprising:

   a core part diameter extension step of arranging a silica glass having a chlorine concentration of 1000 atomic ppm to 15,000 atomic ppm around the perimeter of the first glass rod formed in the collapse step to form a second glass rod to be formed into a core part or part of a core part of an optical fiber.

6. The method according to Claim 5, further comprising:

   a second perimeter grinding step of grinding the perimeter of the second glass rod formed in the core part diameter extension step to allow the second glass rod to have a substantially perfect circular cross section.

7. The method according to Claim 5 or 6, wherein the maximum value of the relative refractive index difference of the second glass rod is in the range of -0.1 % to +0.1 %, and the method further comprises:

   a cladding part formation step of forming an optical cladding part or part of an optical cladding part around the perimeter of the second glass rod, wherein the minimum value of the relative refractive index difference of the optical cladding part is in the range of -0.2% to -0.5%.

**Patentansprüche**

1. Verfahren zum Herstellen einer Vorform einer Glasfaser, die ein Kernteil und ein Mantelteil aufweist, wobei die Vorform der Glasfaser aus Siliziumdioxid-basiertem Glas besteht, wobei das Verfahren umfasst:

   einen Kollabier-Schritt von Kollabieren eines Siliziumdioxid-basierten Glasrohrs durch Erwärmen mit einer Wärmequelle, die kontinuierlich in die Längsrichtung des Glasrohrs verfahren wird, um einen ersten Glasstab auszubilden, der in ein Kernteil oder einen Teil eines Kernteils einer Glasfaser ausgebildet werden soll, wobei das Glasrohr eine Innenoberfläche aufweist, die mit einem Alkalimetallelement dotiert ist, wobei das Glasrohr eine maximale Alkalimetall-Konzentration von 500 bis 20 000 atomare Teile pro Million, eine maximale Chlor-Konzentration von 0 bis 1000 atomare Teile pro Million und eine maximale Fluor-Konzentration von 0 bis 10 000 atomare Teile pro Million aufweist, **dadurch gekennzeichnet, dass** bei dem Kollabier-Schritt die maximale Temperatur der äußeren Oberfläche des Glasrohrs in dem Bereich von 2 000°C bis 2 250°C liegt und die Verfahrgeschwindigkeit der Wärmequelle in dem Bereich von 30 mm/Min bis 100 mm/Min liegt.

2. Verfahren nach Anspruch 1, bei dem in dem Kollabier-Schritt ein Druck innerhalb des Glasrohrs zumindest 90 kPa niedriger als ein Druck außerhalb des Glasrohrs ist.

3. Verfahren nach Anspruch 1 ferner mit:

   einem ersten Umfangsabschleifschritt von Abschleifen des Umfangs des ersten Glasstabs, der in dem Kollabier-Schritt ausgebildet ist, um zu ermöglichen, dass der erste Glasstab einen im Wesentlichen perfekten kreisförmigen Querschnitt aufweist.

4. Verfahren nach einem der Ansprüche 1 bis 3, bei dem der Maximalwert des relativen Unterschieds des Brechungsindex des ersten Glasstabs in dem Bereich von -0,1% bis +0,1% liegt und das Verfahren ferner umfasst:

   einen Ausbildungsschritt des Mantelteils von Ausbilden eines optischen Mantelteils oder eines Teils eines optischen Mantelteils um den Umfang des ersten Glasstabs, wobei der Minimalwert der relativen Differenz des Brechungsindex des optischen Mantelteils in dem Bereich von -0,2% bis -0,5% liegt.

5. Verfahren nach einem der Ansprüche 1 bis 3, ferner mit:

   einem Ergänzungsschritt des Kernteildurchmessers von Anordnen eines Siliziumdioxid-Glases mit einer Chlor-Konzentration von 1 000 atomaren Teile pro Million bis 15 000 atomaren Teile pro Million um den Umfang des ersten Glasstabs, der in dem Kollabier-Schritt ausgebildet ist, zum Ausbilden eines zweiten Glasstabs, der in ein Kernteil oder einen Teil eines Kernteils einer Glasfaser ausgebildet werden soll.

6. Verfahren nach Anspruch 5, ferner mit:

   einem zweiten Umfangsabschleifschritt von Schleifen des Umfangs des zweiten Glasstabs, der in dem Ergänzungsschritt des Kernteildurchmessers ausgebildet ist, zum Ermöglichen, dass der zweite Glasstab einen im Wesentlichen perfekten kreisförmigen Querschnitt aufweist.

7. Verfahren nach Anspruch 5 oder 6, bei dem der Maximalwert der relativen Differenz des Brechungsindex des zweiten Glasstabs in dem Bereich von -0,1% bis +0,1% liegt und das Verfahren ferner umfasst:

   einen Ausbildungsschritt des Mantelteils von Ausbilden eines optischen Mantelteils oder eines Teils eines optischen Mantelteils um den Umfang des zweiten Glasstabs, wobei der Minimalwert der relativen Differenz des Brechungsindex des optischen Mantelteils in dem Bereich von -0,2% bis -0,5% liegt.

## Revendications

1. Procédé de production d'une préforme de fibre optique qui comprend une partie de coeur et une partie de gainage, la préforme de fibre optique étant composée de verre de silice, le procédé comprenant :

   une étape d'affaissement pour affaisser un tube de verre de silice par chauffage par une source de chaleur qui se déplace continûment dans la direction longitudinale du tube de verre pour former une première tige de verre à former en une partie de coeur ou une partie d'une partie de coeur d'une fibre optique, le tube de verre ayant une surface intérieure dopée avec un élément des métaux alcalins, dans lequel le tube de verre a une concentration de métaux alcalins maximum de 500 à 20.000 ppm atomique, une concentration de chlore maximum de 0 à 1000 ppm atomique et une concentration de fluor maximum de 0 à 10 000 ppm atomique, **caractérisé en ce que**, à l'étape d'affaissement, la température maximale de la surface extérieure du tube de verre est dans la plage de 2000 °C à 2250 °C, et la vitesse de déplacement de la source de chaleur est dans la plage de 30 mm/min à 100 mm/min.

**2.** Procédé selon la revendication 1, dans lequel, à l'étape d'affaissement, une pression à l'intérieur du tube de verre est inférieure d'au moins 90 kPa à une pression à l'extérieur du tube de verre.

**3.** Procédé selon la revendication 1, comprenant en outre :

une première étape de meulage de périmètre pour meuler le périmètre de la première tige de verre formée à l'étape d'affaissement pour permettre que la première tige de verre ait une section circulaire sensiblement parfaite.

**4.** Procédé selon l'une quelconque des revendications 1 à 3, dans lequel la valeur maximale de la différence d'indice de réfraction relative de la première tige de verre est dans la plage de -0,1 % à +0,1 %, et le procédé comprend en outre :

une étape de formation de partie de gainage pour former une partie de gainage optique ou une partie d'une partie de gainage optique autour du périmètre de la première tige de verre, dans lequel la valeur minimale de la différence d'indice de réfraction relative de la partie de gainage optique est dans la plage de -0,2 % à -0,5 %.

**5.** Procédé selon l'une quelconque des revendications 1 à 3, comprenant en outre :

une étape d'augmentation de diamètre de partie de coeur consistant à agencer un verre de silice ayant une concentration de chlore de 1000 ppm atomique à 15 000 ppm atomique autour du périmètre de la première tige de verre formée à l'étape d'affaissement pour former une deuxième tige de verre à former en une partie de coeur ou une partie d'une partie de coeur d'une fibre optique.

**6.** Procédé selon la revendication 5, comprenant en outre :

une deuxième étape de meulage de périmètre pour meuler le périmètre de la deuxième tige de verre formée à l'étape d'augmentation de diamètre de partie de coeur pour permettre que la deuxième tige de verre ait une section circulaire sensiblement parfaite.

**7.** Procédé selon la revendication 5 ou 6, dans lequel la valeur maximale de la différence d'indice de réfraction relative de la deuxième tige de verre est dans la plage de -0,1 % à +0,1 %, et le procédé comprend en outre :

une étape de formation de partie de gainage pour former une partie de gainage optique ou une partie d'une partie de gainage optique autour du périmètre de la deuxième tige de verre, dans lequel la valeur minimale de la différence d'indice de réfraction relative de la partie de gainage optique est dans la plage de -0,2 % à -0,5 %.

FIG. 1

```
        ┌─────────────┐
        │    START    │
        └─────────────┘
               │
   ┌───────────────────────┐
   │ ALKALI METAL ADDITION │ ─── S1
   │         STEP          │
   └───────────────────────┘
               │
   ┌───────────────────────┐
   │  DIAMETER REDUCTION   │ ─── S2
   │         STEP          │
   └───────────────────────┘
               │
   ┌───────────────────────┐
   │     ETCHING STEP      │ ─── S3
   └───────────────────────┘
               │
   ┌───────────────────────┐
   │     COLLAPSE STEP     │ ─── S4
   └───────────────────────┘
               │
   ┌───────────────────────┐
   │    ELONGATION STEP    │ ─── S5
   └───────────────────────┘
               │
   ┌───────────────────────┐
   │    FIRST PERIMETER    │ ─── S6
   │     GRINDING STEP     │
   └───────────────────────┘
               │
   ┌───────────────────────┐
   │  CORE PART DIAMETER   │ ─── S7
   │    EXTENSION STEP     │
   └───────────────────────┘
               │
   ┌───────────────────────┐
   │   SECOND PERIMETER    │ ─── S8
   │     GRINDING STEP     │
   └───────────────────────┘
               │
   ┌───────────────────────┐
   │    CLADDING PART      │ ─── S9
   │   FORMATION STEP      │
   └───────────────────────┘
               │
   ┌───────────────────────┐
   │   JACKET FORMATION    │ ─── S10
   │         STEP          │
   └───────────────────────┘
               │
        ┌─────────────┐
        │     END     │
        └─────────────┘
```

FIG. 2A

FIG. 2B

FIG. 2C

FIG. 2D

FIG. 3

FIG. 4

## REFERENCES CITED IN THE DESCRIPTION

**Patent documents cited in the description**

- JP 2007504080 PCT
- JP 2009541796 PCT
- US 20050144986 A